# EUROPÄISCHE PATENTSCHRIFT

(11) **EP 3 656 703 B1**
(45) Veröffentlichungstag und Bekanntmachung des Hinweises auf die Patenterteilung: **08.05.2024**
(21) Anmeldenummer: 19200827.4
(22) Anmeldetag: 01.10.2019
(51) Int. Cl.: B65G 17/08, B65G 17/30

(54) **SYSTEM UND FÖRDERKETTE ZUM FORTBEWEGEN VON ARTIKELN ODER UMVERPACKUNGEN**
SYSTEM AND CONVEYOR CHAIN FOR MOVING ARTICLES OR PACKAGING
SYSTÈME ET CHAINE DE TRANSPORT DESTINÉS AU DÉPLACEMENT D'ARTICLES OU D'EMBALLAGES SECONDAIRES

(30) Priorität: 21.11.2018 DE 102018129327
(43) Veröffentlichungstag der Anmeldung: 27.05.2020
(73) Patentinhaber: Krones Aktiengesellschaft, 93073 Neutraubling (DE)
(72) Erfinder: KÄS, Roland, 93073 Neutraubling (DE)
(74) Vertreter: Benninger, Johannes

(56) Entgegenhaltungen:
- EP-A1- 2 157 035
- WO-A1-2012/126640
- DE-A1- 10 027 229
- JP-A- S57 180 515
- JP-B2- 4 074 678

## Beschreibung

Die vorliegende Erfindung betrifft ein System zum Fortbewegen von Artikeln gemäß den Merkmalen des unabhängigen Anspruchs 1.

Um Artikel wie bspw. Getränkebehälter oder Umverpackungen auf oder entlang einer Verpackungsstraße fortbewegen zu können, sind im Stand der Technik unterschiedliche Transportsysteme bekannt. Als Transportmittel bzw. als Förderelemente werden unterschiedliche Förderer oder sich fortbewegende Auflageebenen eingesetzt.

Durch die DE 43 12 864 A1 ist ein Kettenglied-Förderer bekannt, welcher sich aus einer Vielzahl von gelenkig miteinander verbundenen Kettengliedern zusammensetzt. Eine obere Platte jedes Kettengliedes ist mit Fingern und dazwischenliegenden Ausnehmungen im vorderen Rand und im hinteren Rand versehen, welche versetzt zueinander angeordnet sind, so dass die Finger und die Ausnehmungen an benachbarten Gliedern miteinander wechselwirken können. Die Kettenglieder können aus Kunststoffmaterialien spritzgegossen werden, oder sie können aus einem metallischen Material, wie einem Metallblech, ausgeschnitten werden.

Durch die DE 103 30 479 A1 und DE 20 2009 005 793 U1 sind jeweils weitere Förderketten offenbart, bei welchen die Kettenglieder aus einem Kunststoff gespritzt oder aus einem metallischen Material hergestellt sein können.

Die Verwendung von Förderketten aus einem metallischen Material bzw. von Stahlscharnierbandketten hat sich u.a. dahingehend als nachteilig erwiesen, dass diese Ketten einer Schmierung bedürfen. Da sich die hierfür eingesetzten Schmiermittel während des Betriebs der Förderkette auf der gesamten Förderkette verteilen, verschmutzen und/oder verkleben insbesondere die auf der Förderkette fortbewegten und/oder transportierten Artikel, wie bspw. Getränkebehälter oder Umverpackungen. Um die auf der Förderkette transportieren und mit Schmiermittel verunreinigten und/oder verklebten Artikel im weiteren Förderverlauf handhaben zu können, müssen sie vorab gereinigt werden, wodurch die Kosten steigen und die Prozesse verlangsamt werden.

Die Verwendung von einer aus einem Kunststoffmaterial gebildeten Förderkette wie bspw. Mattenketten ermöglicht zwar einem Betrieb im Trockenlauf, d.h. ohne Einsatz von Schmiermitteln. Eine derartige Kurvenführung mit Gleitleisten aus Kunststoff ist durch die DE 10 2016 104 977 A1 bekannt. Zudem wird in dieser Offenbarung die Problematik eines raschen Verschleißes derartiger Kunststoffführungen diskutiert, was dort durch Anbringung definierter Markerelemente, bspw. in Gestalt von Sensoren, behoben werden soll. Auf diese Weise soll eine definierte Verschleißgrenze angezeigt und von einem Operator oder Wartungstechniker erkannt werden können, um entsprechend abgenutzte Kurvenführungen rechtzeitig austauschen zu können.

Insgesamt jedoch neigen derartige Führungen für Förderketten in der Regel zu einem erhöhten Verschleiß. Daher müssen einzelne Kettenglieder der Förderkette oder die gesamte Förderkette häufig gewechselt werden, wodurch ebenfalls die Kosten ansteigen und ein hoher Zeitaufwand aufgebracht werden muss. Gleiches gilt grundsätzlich für Kontaktflächen wie Führungsunterlagen, auf denen derartige Förderketten gleitend geführt sind. Auch diese Gleitflächen unterliegen in aller Regel einem unvermeidlichen Verschleiß.

Durch die DE 20 2009 005 793 U1 ist darüber hinaus eine Förderkette bekannt, bei welcher die Kettenglieder aus unterschiedlichen Materialen gebildet sind. Je nach Materialpaarung und/oder Materialzusammensetzung ergeben sich jedoch auch bei derartigen Förderketten die Nachteile hinsichtlich eines hohen Verschleißes oder einer geringen Lebensdauer etc.

Das weitere Dokument DE 100 27 229 A1 beschreibt ein System gemäß dem Oberbegriff des Anspruchs 1 und eine Förderkette mit Kettengliedern aus mindestens zwei unterschiedlichen Materialien. Hierbei weist das Kettenglied einen Grundkörper auf, an dessen Unterseite orthogonal zu diesem und parallel zu einer Längsmittelachse Führungsbereiche mit inneren und äußeren Seitenflächen angeordnet sind. Die Seitenflächen weisen dabei Durchgriffe für einen nicht gezeigten Gelenkbolzen auf. Mittels dieses Gelenkbolzens werden aufeinanderfolgende Kettenglieder miteinander verbunden. Hierbei greift der vordere Teil des Führungsbereiches in den hinteren Teil des Führungsbereiches des darauffolgenden Kettengliedes ein. Die äußeren Seitenflächen des hinteren Teils des Führungsbereiches sind aus einem Material, welches einen niedrigeren Reibwert hat als das Material des Grundkörpers. Darüber hinaus sind die links und rechts des Führungsbereiches liegenden Gleitflächen des Kettengliedes aus einem identischen Material mit einem niedrigen Reibwert versehen. Die äußeren Seitenflächen als auch die Gleitfläche liegen auf dem Obertrum eines Förderers auf und stehen mit diesem in unmittelbarem Kontakt.

Der Erfindung liegt daher die Aufgabe zugrunde, ein System zum Fortbewegen von Artikeln zur Verfügung zu stellen, bei welchem die genannten Nachteile aus dem Stand der Technik vermieden und/oder zumindest reduziert werden sollen. Zudem soll eine Förderkette zur Verfügung gestellt werden, welche einen einfachen Aufbau besitzt.

Diese Aufgaben werden durch ein System zum Fortbewegen von Artikeln mit den Merkmalen des unabhängigen Anspruchs 1 gelöst. Vorteilhafte Ausgestaltungen und Weiterbildungen der Erfindung sind in den jeweils abhängigen Ansprüchen angegeben.

Die Erfindung betrifft ein System zum Fortbewegen von Artikeln, wobei das System zum Fortbewegen von Artikeln insbesondere in einer Verpackungsstraße oder bei sonstigen Transportwegen verwendet werden kann. Wenn im vorliegenden Zusammenhang von Artikeln gesprochen wird, so können dies bspw. Getränkebehälter oder Flaschen oder auch Umverpackungen wie bspw. oben offene Kartons, Trays, Flaschenkästen, Getränkekisten usw. sein.

Das System zum Fortbewegen von Artikeln wie bspw. von Getränkebehältern oder Umverpackungen umfasst mindestens eine Förderkette, welche eine Standfläche zum stehenden Transport von Artikeln oder Umverpackungen ausbildet. Die Standfläche kann vorzugsweise plan ausgebildet sein.

Das System umfasst weiter wenigstens eine feststehende Gleitleiste, mit welcher die mindestens eine Förderkette während des Transportes von Artikeln wie bspw. Getränkebehälter oder Umverpackungen in Oberflächenkontakt steht, wobei vorgesehen ist, dass die mindestens eine Förderkette in einem bestimmten oder definierten und/oder abgegrenzten Bereich, welcher bestimmte oder definierte und/oder abgegrenzte Bereich für den Oberflächenkontakt mit der wenigstens einen Gleitleiste vorgesehen ist oder den Oberflächenkontakt mit der Gleitleiste ausbildet, gegenüber weiteren Bereichen aus einem Material mit erhöhter Abriebfestigkeit ausgebildet ist oder ein Material mit erhöhter Abriebfestigkeit aufweist.

Wenn im vorliegenden Zusammenhang von einer Standfläche zum stehenden Transport von Artikeln oder Umverpackungen gesprochen wird, so kann es sich insbesondere um eine Oberseite der Förderkette im Zugtrum handeln, während hingegen der bestimmte Bereich zumindest einen Bereich einer Unterseite der mindestens einen Förderkette im Zugtrum ausbildet. Somit kann der bestimmte Bereich während des Transportes von Artikeln wie bspw. Getränkebehälter oder Umverpackungen im Zugtrum mit der wenigstens einen feststehenden Gleitleisten in Oberflächenkontakt stehen; d.h. der bestimmte Bereich der mindestens einen Förderkette kann im Zugtrum auf der wenigstens einen feststehenden Gleitleiste aufliegen und entlang dieser gleitend bewegt werden.

Durch das erfindungsgemäße System zum Fortbewegen von Artikeln kann somit mindestens eine Förderkette bereitgestellt werden, welche sich aus mindestens zwei Materialien mit unterschiedlicher Abriebfestigkeit zusammensetzt. Damit können jeweils Oberflächen aus unterschiedlichen Materialien bereitgestellt werden, die für ihren jeweiligen Einsatz zweckmäßig sind.

Gemäß einem bevorzugten Ausführungsbeispiel kann es vorgesehen sein, dass eine Fläche, insbesondere die Unterseite, der mindestens einen Förderkette im Zugtrum zumindest bereichsweise aus dem Material des bestimmten Bereichs sowie zumindest bereichsweise aus dem Material der weiteren Bereiche der mindestens einen Förderkette gebildet ist, wobei der bestimmte Bereich gegenüber den weiteren Bereichen aus einem Material mit erhöhter Abriebfestigkeit gebildet ist.

Alternativ kann es auch vorgesehen sein, dass eine Fläche, insbesondere die Unterseite, der mindestens einen Förderkette im Zugtrum vollständig durch den bestimmten Bereich gebildet ist. Somit kann es vorgesehen sein, dass die mindestens eine Förderkette eine Fläche umfasst, welche ausschließlich durch ein Material mit erhöhter Abriebfestigkeit gebildet ist.

Wenn nachfolgend jeweils vom Zugtrum die Rede ist, so soll damit der Abschnitt der mindestens einen Förderkette gemeint sein, welcher gezogen und stramm gehalten wird, und entlang der wenigstens einen feststehenden Gleitleiste bewegt wird, während hingegen beim Leertrum die mindestens eine Förderkette lose bzw. durchhängend ausgebildet ist.

Es kann vorgesehen sein, dass die wenigstens eine feststehende Gleitleiste aus einem Material gebildet ist, welches gegenüber dem Material des bestimmten Bereichs der mindestens einen Förderkette zumindest näherungsweise die gleiche Abriebfestigkeit oder eine geringere Abriebfestigkeit aufweist. Aufgrund einer derartigen Materialpaarung können Verschleißerscheinungen an der mindestens einen Förderkette, insbesondere am bestimmten Bereich der mindestens einen Förderkette, reduziert werden. Dadurch kann u.a. die Standzeit sowie die Lebensdauer der mindestens einen Förderkette und/oder der wenigstens einen feststehenden Gleitleiste erhöht werden. Auch können aufgrund geringerer Wartungsarbeiten Kosten gesenkt werden.

Insbesondere kann es vorgesehen sein, dass die wenigstens eine feststehende Gleitleiste aus einem metallischen Material wie bspw. Stahl, Edelstahl, Stahllegierung der Edelstahllegierung gebildet ist. Grundsätzlich könnte für die Ausbildung der wenigstens einen feststehenden Gleitleiste auch jegliches weiteres metallisches Material verwendet werden, welches verschleißbeständig ist und/oder zumindest näherungsweise die gleiche Abriebfestigkeit oder eine geringere Abriebfestigkeit wie der bestimmte Bereich der mindestens einen Förderkette aufweist.

Die Ausbildung der wenigstens einen feststehenden Gleitleiste aus einem metallischen Material kann vorteilhafterweise auch dazu dienen, dass die durch die Reibung zwischen dem bestimmten Bereich der mindestens einen Förderkette und der wenigstens einen feststehenden Gleitleiste entstehende Wärme besser aufgenommen und/oder abgeleitet werden kann.

Alternativ kann die wenigstens eine Gleitleiste aus wenigstens einem Kunststoff gebildet sein. Bei dem wenigstens einen Kunststoff kann es sich vorzugsweise um jeden Kunststoff handeln, welcher gute Reibungs- und Verschleißeigenschaften und/oder Gleitreibeigenschaften aufweist. Insbesondere kann der wenigstens eine Kunststoff aus PTFE, PEEK, PPS oder dergleichen gebildet sein. Auch wäre es denkbar, den wenigstens einen Kunststoff mit Additiven zu versehen, um die Reibungseigenschaften wie beispielswiese die Abriebfestigkeit und/oder die Verschleißbeständigkeit zu erhöhen und/oder zu verbessern.

Erfindungsgemäß ist vorgesehen, dass der bestimmte Bereich der mindestens einen Förderkette durch wenigstens ein Einsatzelement gebildet ist, welcher in wenigstens eine Aussparung der mindestens einen Förderkette bündig eingesetzt ist. Erfindungsgemäß ist die wenigstens eine Aussparung jeweils korrespondierend zum wenigstens einen Einsatzelement ausgebildet.

Durch das bündige Einsetzen des wenigstens einen Einsatzelements in die wenigstens eine Aussparung der mindestens einen Förderkette kann eine Gleitfläche bereitgestellt werden, welche entlang der wenigstens einen feststehenden Gleitleiste im Zugtrum gleitend bewegt werden kann und/oder mit der wenigstens einen feststehenden Gleitleiste im Zugtrum im Oberflächenkontakt stehen kann.

Erfindungsgemäß wird vorgesehen, dass die mindestens eine Förderkette mehrere Aussparungen umfasst, in welche jeweils das wenigstens eine Einsatzelement eingesetzt werden kann.

Das wenigstens eine Einsatzelement kann vorzugsweise form-, stoff- und/oder kraftschlüssig in die wenigstens eine Aussparung der mindestens einen Förderkette eingesetzt werden. Insbesondere kann das wenigstens eine Einsatzelement lösbar und/oder auswechselbar in die wenigstens eine Aussparung der mindestens einen Förderkette eingesetzt sein/werden, so dass das wenigstens eine Einsatzelement bei Wartungsarbeiten jederzeit und ohne großen Aufwand ausgetauscht werden kann.

Gemäß einem Ausführungsbeispiel können in der wenigstens einen Aussparung Bohrungen oder dergleichen Öffnungen vorgesehen sein, so dass das wenigstens eine Einsatzelement in die wenigstens eine Aussparung mittels geeigneten Befestigungsmitteln eingeschraubt oder auf sonstige Weise befestigt werden kann. Bei einer derartigen Befestigung kann das entsprechende Befestigungsmittel im wenigstens einen Einsatzelement gegenüber der einen Fläche der mindestens einen Förderkette abgesenkt bzw. eingesenkt angeordnet sein.

Gemäß einem weiteren Ausführungsbeispiel kann das wenigstens eine Einsatzelement rastend oder klemmend in die wenigstens eine Aussparung der mindestens einen Förderkette eingesetzt werden.

Gemäß einem weiteren Ausführungsbeispiel kann das wenigstens eine Einsatzelement auch mittels Klebemitteln klebend in die wenigstens eine Aussparung der mindestens einen Förderkette eingesetzt werden.

Grundsätzlich wären sämtliche weitere auswechselbare Befestigungsmethoden und/oder Kombinationen verschiedener Befestigungsmethoden denkbar, mittels welchen das wenigstens eine Einsatzelements in die wenigstens eine Aussparung bündig und/oder auswechselbar eingesetzt werden kann.

Das wenigstens eine Einsatzelement kann insbesondere aus einem metallischen Material, insbesondere aus einem Stahl oder einer Stahllegierung oder dergleichen gebildet sein. Alternativ kann das wenigstens eine Einsatzelement auch aus jeglichen weiteren metallischen Material gebildet sein, welches eine hohe Abriebfestigkeit und/oder Verschleißbeständigkeit und/oder Wärmeleitfähigkeit aufweist. Bspw. kann es sich bei dem wenigstens einen Einsatzelement um eine Stahlleiste handeln.

Weiter kann es vorgesehen sein, dass der weitere Bereich der mindestens einen Förderkette durch wenigstens einen Kunststoff gebildet ist, welcher eine geringere Abriebfestigkeit als das wenigstens eine Einsatzelement aufweist. Der weitere Bereich der mindestens einen Förderkette kann insbesondere spritzgegossen werden.

Es kann vorgesehen sein, dass durch den weiteren Bereich der mindestens einen Förderkette insbesondere die Standfläche für die Artikel bereitgestellt werden kann; d.h. die Standfläche für die Artikel kann insbesondere durch dasjenige Material gebildet sein, welches der weitere Bereich der Förderkette umfasst. Der weitere Bereich der mindestens einen Förderkette kann auch zumindest einen Bereich der Unterseite der mindestens einen Förderkette im Zugtrum ausbilden.

Da durch den weiteren Bereich der mindestens einen Förderkette insbesondere die Standfläche für die Artikel bereitgestellt wird, kann es vorgesehen sein, dass die Standfläche der Förderkette aus wenigstens einem Kunststoff gebildet ist. Eine aus wenigstens einem Kunststoff gebildete Standfläche hat sich u.a. auch dahingehend als vorteilhaft erwiesen, dass die Artikel auf einer solchen Standfläche besser positioniert werden können und/oder eine bessere Standfestigkeit aufweisen können. Besonders vorteilhaft ist auch, dass im Bereich der Standfläche auf eine Schmierung mittels wenigstens einen Schmiermittels verzichtet werden kann. Dadurch können insbesondere die auf der Standfläche aufgesetzten Artikel ohne zu Verschmutzen oder zu Verkleben fortbewegt und/oder transportiert werden können.

Weiter kann es vorgesehen sein, dass die mindestens eine Förderkette aus einer Vielzahl von gelenkig miteinander verbundenen Kettengliedern gebildet ist. Vorzugsweise kann eine umlaufende Förderkette ausgebildet werden.

Ergänzend sei an dieser Stelle darauf hingewiesen, dass die einzelnen Kettenglieder jeweils eine Standfläche zum stehenden Transport von Artikeln wie bspw. Getränkebehälter oder Umverpackungen sowie einen bestimmten Bereich umfassen, welcher bestimmte Bereich für den Oberflächenkontakt mit der wenigstens einen feststehenden Gleitleiste vorgesehen ist, wobei der bestimmte Bereich gegenüber weiteren Bereichen aus einem Material mit erhöhter Abriebfestigkeit ausgebildet ist und/oder ein Material mit erhöhter Abriebfestigkeit aufweist.

Die Kettenglieder können somit den Aufbau umfassen, wie es durch die mindestens eine Förderkette beansprucht ist. Wenn daher zuvor von mindestens einer Förderkette gesprochen wurde, so sollen dessen Merkmale auch für die Vielzahl an Kettengliedern gelten und/oder umfasst sein.

Weiter kann es vorgesehen sein, dass die wenigstens eine feststehende Gleitleiste als Abstützfläche für den bestimmten Bereich der mindestens einen Förderkette ausgebildet ist. Insbesondere kann die Abstützfläche plan ausgebildet sein, so dass der mindestens eine Bereich im Zugtrum gleitend entlang der Abstützfläche bewegt werden kann.

Weiter kann es vorgesehen sein, dass der mindestens einen Förderkette zumindest ein Antriebsmittel zugeordnet ist, mittels welchem die mindestens eine Förderkette umlaufend angetrieben werden kann. Bei dem zumindest einen Antriebsmittel kann es sich insbesondere um eine motorische, elektrischen oder sonstigen Antrieb oder um eine Antriebsrolle oder dergleichen handeln.

Erfindungsgemäß umfasst das System zum Fortbewegen von Artikeln wenigstens zwei feststehende und vorzugsweise parallel zueinander angeordnete Gleitleisten, mit welchen die mindestens eine Förderkette während des Transportes von Artikeln in Oberflächenkontakt steht. Bei Aufliegen der mindestens einen Förderkette auf wenigstens zwei feststehenden Gleitleisen können eine höhere Stabilität und eine bessere Kräfteverteilung während des Fortbewegens von Artikeln auf der Standfläche der mindestens einen Förderkette erreicht werden.

Es kann vorgesehen sein, dass die Förderkette aus einer Vielzahl von gelenkig miteinander verbundenen Kettengliedern gebildet ist. Vorzugsweise kann eine umlaufende Förderkette ausgebildet werden.

Insbesondere kann es vorgesehen sein, dass die einzelnen Kettenglieder jeweils eine Standfläche zum stehenden Transport von Artikeln wie bspw. Getränkebehälter oder Umverpackungen sowie einen bestimmten Bereich umfassen, welcher bestimmte Bereich für den Oberflächenkontakt mit der wenigstens einen Gleitleiste vorgesehen ist, wobei der bestimmte Bereich gegenüber weiteren Bereichen aus einem Material mit erhöhter Abriebfestigkeit ausgebildet ist und/oder ein Material mit erhöhter Abriebfestigkeit aufweist.

Die nachfolgenden Ausführungen fassen nochmal einige Aspekte der zuvor bereits in verschiedenen Ausführungsvarianten erläuterten Erfindung zusammen, konkretisieren einige Aspekte, sollen jedoch nicht im Widerspruch zu den bereits gemachten Ausführungen gesehen werden, sondern in Zusammenschau, bei Zweifeln ggf. als speziellere Ausführungsvarianten und/oder Abwandlungen. So kann, wie bereits oben mehrfach erwähnt, das erfindungsgemäße System zum Fortbewegen von Artikeln wie Getränkebehältern oder dergleichen insbesondere eine Förderkette als sich bewegende Auflageebene für die Artikel bzw. Getränkebehälter oder auch zu fördernde Umverpackungen umfassen. Die Förderkette kann insbesondere als endlos umlaufender Mattenförderer oder als Kunststoffmattenförderer ausgebildet sein.

Die einen Teil des erfindungsgemäßen Fortbewegungssystems bildende Förderkette setzt sich aus einer Vielzahl von gelenkig miteinander verbundenen Kettengliedern zusammen. Die einzelnen Kettenglieder, die in der Regel allesamt gleichartig ausgebildet und geformt sind, sind gelenkig mittels Gelenkverbindungen untereinander verbunden. Zudem weist die Förderkette eine Standfläche zum stehenden Transport von Artikeln wie bspw. Getränkebehälter oder Umverpackungen auf. Insbesondere weisen die einzelnen Kettenglieder gemeinsam und in Zusammenwirkung mit jeweils benachbarten Kettengliedern eine Standfläche zum stehenden Transport von Artikeln wie bspw. Getränkebehälter oder Umverpackungen auf.

Wie dies bei Förderketten üblich ist, werden die zwischen Umlenkungen in aller Regel geradlinig geführten Abschnitte als Zugtrum sowie als Leertrum bezeichnet. Im vorliegenden Fall bildet die als Auflage- oder Standfläche fungierende Oberseite oder Außenseite der Förderkette das Zugtrum, während hingegen es sich bei der rücklaufenden Innenseite oder Unterseite der Förderkette um das Leertrum der Förderkette handelt.

Die Unterseite der Förderkette im Zugtrum umfasst zumindest bereichsweise einen bestimmten Bereich, der für den Oberflächenkontakt mit wenigstens einer Gleitleiste ausgebildet ist. Insbesondere umfassen die Kettenglieder der Förderkette jeweils einen bestimmten Bereich, der für den Oberflächenkontakt mit der wenigstens einen Gleitleiste ausgebildet ist. Dieser definierte Bereich der Förderkette bzw. der Kettenglieder zeichnet sich gegenüber weiteren Bereichen der Förderkette bzw. der Kettenglieder dadurch aus, dass der bestimmte Bereich aus einem Material mit erhöhter Abriebfestigkeit gebildet ist und/oder ein Material mit erhöhter Abriebfestigkeit aufweist.

So kann der bestimmte Bereich bspw. durch wenigstens ein Einsatzelement gebildet sein, welches jeweils in eine auf der Unterseite bzw. Innenseite eingebrachte Aussparung der jeweiligen Kettenglieder eingesetzt ist. Die Aussparungen sind jeweils korrespondierend zum wenigstens einen Einsatzelement ausgebildet, so dass das wenigstens eine Einsatzelement jeweils bündig in die Auspaarungen der Kettenglieder eingesetzt werden kann. Durch das bündige Einsetzen des wenigstens einen Einsatzelements in die jeweiligen Aussparungen des Kettengliedes wird auf der Unterseite bzw. Innenseite der Förderkette im Zugtrum eine Gleitfläche bereitgestellt bzw. ausgebildet, welche entlang wenigstens einer feststehenden Gleitleiste bewegt werden kann.

Das wenigstens eine Einsatzelement ist vorzugsweise form-, stoff- und/oder kraftschlüssig in die jeweiligen Aussparungen der Kettenglieder eingesetzt. Insbesondere ist das wenigstens eine Einsatzelement in die jeweiligen Aussparungen der Kettenglieder austauschbar bzw. lösbar wie bspw. rastend oder klemmend eingesetzt oder eingeschraubt, damit das wenigstens eine Einsatzelement bei Bedarf, insbesondere bei Verschleiß schnell und unkompliziert gewechselt werden kann.

Das wenigstens eine Einsatzelement ist aus einem metallischen Material oder aus einem sonstigen Material gebildet, welches sich jeweils durch eine erhöhte Abriebfestigkeit auszeichnet. Insbesondere ist das wenigstens eine Einsatzelement aus Stahl oder aus einer Stahllegierung gebildet.

Die weiteren Bereiche der einzelnen Kettenglieder sind jeweils aus einem Kunststoff mit einer geringeren Abriebfestigkeit als das wenigstens eine Einsatzelement gebildet. Insbesondere bilden die weiteren Bereiche auch zumindest einen Teil der Unterseite der mindestens einen Förderkette, insbesondere der einzelnen Kettenglieder, aus, d.h. die Kettenglieder umfassen jeweils eine Fläche, welche zumindest bereichsweise aus dem Material des bestimmten Bereichs als auch durch das Material der weiteren Bereiche ausgebildet ist.

Der Förderkette ist zumindest ein hier nicht dargestelltes Antriebsmittel zugeordnet, mittels welchem die Förderkette umlaufend angetrieben werden kann. Bei dem zumindest einen Antriebsmittel kann es sich insbesondere um einen motorischen, elektrischen oder sonstigen Antrieb handeln.

Wahlweise können die oben erwähnten Einsatzelemente im Zugtrum der Förderkette auf wenigstens zwei feststehenden Gleitleisten aufliegen, so dass das wenigstens eine Einsatzelement jedes Kettengliedes mit den wenigstens zwei Gleitleisten in gleitendem Oberflächenkontakt steht.

Die wenigstens zwei feststehenden Gleitleisten sind zumindest näherungsweise parallel zueinander angeordnet und bilden eine Abstützfläche für das Kettenglied im Zugtrum aus. Die Abstützfläche ist vorzugsweise plan ausgebildet. Insbesondere liegt das Kettenglied mit seinem oben erläuterten bestimmten Bereich bzw. das wenigstens eine Einsatzelement derart auf den wenigstens zwei feststehenden Gleitleisten auf, so dass das Kettenglied entlang der wenigstens zwei feststehenden Gleitleisten im Zugtrum gleitend bewegt werden kann.

Die wenigstens zwei feststehenden Gleitleisten sind vorzugsweise jeweils aus einem Material gebildet, welches gegenüber dem Material des wenigstens einen Einsatzelements der jeweiligen Kettenglieder zumindest näherungsweise die gleiche Abriebfestigkeit oder eine geringere Abriebfestigkeit aufweist. Insbesondere sind die wenigstens zwei Gleitleisten aus einem metallischen Material, wie beispielsweise Edelstahl, gebildet. Demnach ergibt sich zwischen den wenigstens zwei Gleitleisten und dem wenigstens einen Einsatzelement jeweils eine Materialpaarung von Stahl auf Stahl, während hingegen die Standfläche aus einem Kunststoffmaterial gebildet ist.

Zwar hat ausschließlich zwischen den wenigstens zwei feststehenden Gleitleisten und dem wenigstens einen Einsatzelement des jeweils kontaktierenden Kettengliedes eine Schmierung mittels wenigstens einen Schmiermittels zu erfolgen, so dass das Kettenglied ohne große Verschleißerscheinungen entlang der wenigstens zwei feststehenden Gleitleisten bewegt werden kann. Da die Standfläche des Kettengliedes aus einem Kunststoff gebildet ist, entfällt in diesem Bereich des Kettengliedes die Schmierung mittels des wenigstens einen Schmiermittels. Damit können die Artikel ohne ausgeprägte Verschmutzungsproblematik, die sich durch den Einsatz von Schmiermitteln ergäbe, und/oder ohne eine mit dem Einsatz von Schmiermitteln verbundene Verklebungsgefahr, auf der Standfläche fortbewegt werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Fig. 1 zeigt eine schematische Schnittdarstellung eines Abschnittes einer Förderkette in einer Seitenansicht, welche nicht gemäß der Erfindung ausgebildet ist.

Fig. 2A zeigt eine schematische Schnittdarstellung einer Ausführungsform eines Kettenglieds einer Förderkette gemäß Fig. 1, welches auf wenigstens zwei Gleitleisten aufliegt, wobei diese Ausführungsform nicht zum Gegenstand der Erfindung gehört.

Fig. 2B zeigt eine schematische Schnittdarstellung der erfindungsgemäßen Ausführungsform eines Kettenglieds einer Förderkette gemäß Fig. 1, welches auf wenigstens zwei Gleitleisten aufliegt.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die das erfindungsgemäße System zum Fortbewegen von Artikeln ausgestaltet sein können und stellen keine abschließende Begrenzung dar.

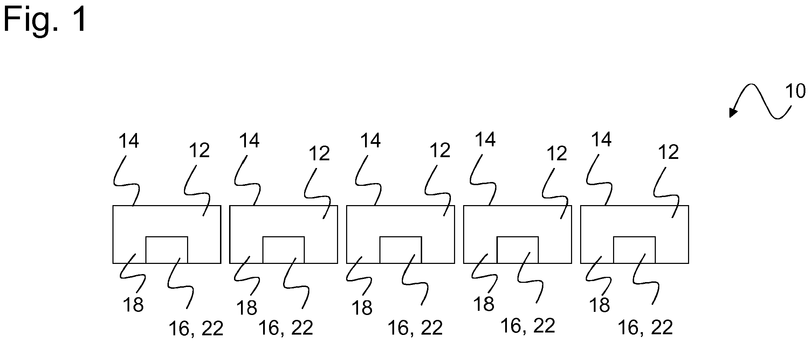

Die schematische Darstellung Fig. 1 zeigt zumindest einen Abschnitt der Förderkette 10 zum Fortbewegen von Artikeln wie bspw. Getränkebehälter oder Umverpackungen in einer Schnitt-/ Seitenansicht im Zugtrum. Die Förderkette 10 ist als Mattenförderer oder als Kunststoffmattenförderer ausgebildet.

Die Förderkette 10 setzt sich aus einer Vielzahl von Kettengliedern 12 zusammen, welche umlaufend miteinander verbunden sind. In der vorliegenden Fig. 1 sind jedoch nur fünf Kettengliedern 12 im Zugtrum abgebildet. Die Kettenglieder 12 sind gelenkig mittels nicht dargestellter Gelenkverbindungen miteinander verbunden.

Die Förderkette 10 weist eine Standfläche 14 zum stehenden Transport von Artikeln wie bspw. Getränkebehälter oder Umverpackungen auf. Insbesondere weisen die einzelnen Kettenglieder 12 jeweils eine Standfläche 14 zum stehenden Transport von Artikeln wie bspw. Getränkebehälter oder Umverpackungen auf.

Gemäß vorliegender Fig. 1 ist ein Abschnitt der Förderkette 10 im Zugtrum abgebildet. Somit handelt es sich bei der Standfläche 14 um die Oberseite bzw. Außenseite der Förderkette 10, während hingegen es sich bei der Innenseite der Förderkette 10 um die Unterseite der Förderkette 10 handelt.

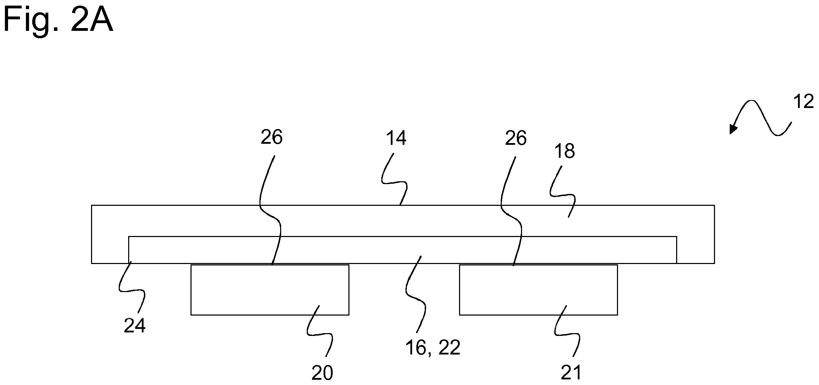

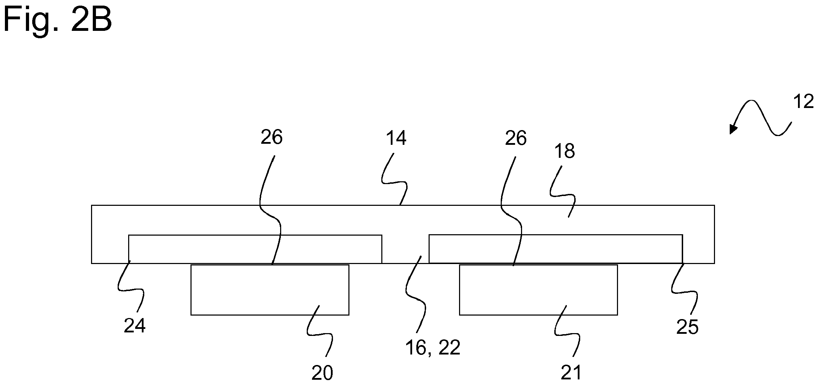

Die Unterseite der Förderkette 10 im Zugtrum umfasst zumindest bereichsweise einen bestimmten Bereich 16, welcher bestimmte Bereich 16 für den Oberflächenkontakt mit wenigstens einer Gleitleiste 20 (vgl. Figuren 2A und 2B) ausgebildet ist. Insbesondere umfassen die Kettenglieder 12 der Förderkette 10 jeweils einen bestimmten Bereich 16, welcher bestimmte Bereich 16 für den Oberflächenkontakt mit der wenigstens einen Gleitleiste 20 ausgebildet ist.

Der bestimmte Bereich 16 der Förderkette 10 bzw. der Kettenglieder 12 zeichnet sich gegenüber weiteren Bereichen 18 der Förderkette 10 bzw. der Kettenglieder 12 dadurch aus, dass der bestimmte Bereich 16 aus einem Material mit erhöhter Abriebfestigkeit gebildet ist und/oder ein Material mit erhöhter Abriebfestigkeit aufweist.

Gemäß vorliegendem Ausführungsbeispiel ist der bestimmte Bereich 16 durch wenigstens ein Einsatzelement 22 gebildet, welches jeweils in eine auf der Unterseite bzw. Innenseite eingebrachte Aussparungen 24 der Kettenglieder 12 eingesetzt ist. Die Aussparungen 24 sind jeweils korrespondierend zum wenigstens einen Einsatzelement 22 ausgebildet, so dass das wenigstens eine Einsatzelement 22 jeweils bündig in die Auspaarungen 24 der Kettenglieder 12 eingesetzt werden kann.

Durch das bündige Einsetzen des wenigstens einen Einsatzelements 22 in die jeweiligen Aussparungen 24 des Kettengliedes 12 wird auf der Unterseite bzw. Innenseite der Förderkette 10 im Zugtrum eine Gleitfläche 26 bereitgestellt bzw. ausgebildet, welche entlang wenigstens einer feststehenden Gleitleiste 20 (vgl. Figuren 2A und 2B) bewegt werden kann.

Das wenigstens eine Einsatzelement 22 ist vorzugsweise form-, stoff- und/oder kraftschlüssig in die jeweiligen Aussparungen 24 der Kettenglieder 12 eingesetzt. Insbesondere ist das wenigstens eine Einsatzelement 22 in die jeweiligen Aussparungen 24 der Kettenglieder 12 austauschbar bzw. lösbar wie bspw. rastend oder klemmend eingesetzt oder eingeschraubt, damit das wenigstens eine Einsatzelement 22 bei Bedarf, insbesondere bei Verschleiß schnell und unkompliziert gewechselt werden kann.

Das wenigstens eine Einsatzelement 22 ist aus einem metallischen Material oder aus einem sonstigen Material gebildet, welches sich jeweils durch eine erhöhte Abriebfestigkeit auszeichnet. Insbesondere ist das wenigstens eine Einsatzelement 22 aus Stahl oder aus einer Stahllegierung gebildet.

Die weiteren Bereiche 18 der einzelnen Kettenglieder 12 sind jeweils aus einem Kunststoff mit einer geringeren Abriebfestigkeit als das wenigstens eine Einsatzelement 22 gebildet. Insbesondere bilden die weiteren Bereiche 18 auch zumindest einen Teil der Unterseite der mindestens einen Förderkette 10, insbesondere der einzelnen Kettenglieder 12, aus, d.h. die Kettenglieder 12 umfassen jeweils eine Fläche, welche zumindest bereichsweise aus dem Material des bestimmten Bereichs 16 als auch durch das Material der weiteren Bereiche 18 ausgebildet ist.

Der Förderkette 10 ist zumindest ein hier nicht dargestelltes Antriebsmittel zugeordnet, mittels welchem die Förderkette 10 umlaufend angetrieben werden kann. Bei dem zumindest einen Antriebsmittel kann es sich insbesondere um einen motorischen, elektrischen oder sonstigen Antrieb handeln.

In der Fig. 2A ist ein Kettenglied 12 in einer Schnittdarstellung abgebildet, welches im Zugtrum auf wenigstens zwei feststehenden Gleitleisten 20, 21 aufliegt. Die Ausgestaltung bzw. Bauform des Kettengliedes 12 entspricht der in Fig. 1 dargestellten Ausführungsform der Kettenglieder 12 und soll damit bei vorliegender Fig. 2A umfasst sein.

Das Kettenglied 12 umfasst einen bestimmten Bereich 16, welcher gegenüber weiteren Bereichen 18 des Kettengliedes 12 aus einem Material mit erhöhter Abriebfestigkeit ausgebildet ist und/oder ein Material mit erhöhter Abriebfestigkeit aufweist. Der bestimmte Bereich 16 des Kettengliedes 12 ist durch wenigstens ein Einsatzelement 22 gebildet, welches aus einem metallischen Material oder aus einem sonstigen Material mit erhöhter Abriebfestigkeit gebildet ist. Vorzugsweise ist das wenigstens eine Einsatzelement 22 aus Stahl gebildet; d.h. bei dem wenigstens einen Einsatzelement 22 handelt es sich vorzugsweise um einen Stahlleiste.

Der weitere Bereich 18 des Kettenglieds 12 ist hingegen aus einem Kunststoff mit einer geringeren Abriebfestigkeit als das wenigstens eine Einsatzelement 22 gebildet und bildet auf seiner Oberseite im Zugtrum eine Standfläche 14 für Artikel wie bspw. Getränkebehälter oder Umverpackungen aus.

Darüber hinaus wird durch Fig. 2A deutlich, dass das wenigstens eine Einsatzelement 22 im Zugtrum auf den wenigstens zwei feststehenden Gleitleisten 20, 21 aufliegt, so dass das wenigstens eine Einsatzelement 22 mit den wenigstens zwei Gleitleisten 20, 21 in Oberflächenkontakt steht.

Die wenigstens zwei feststehenden Gleitleisten 20 sind zumindest näherungsweise parallel zueinander angeordnet und bilden eine Abstützfläche für den das Kettenglied 12 im Zugtrum aus. Die Abstützfläche ist vorzugsweise plan ausgebildet. Insbesondere liegt das Kettenglied 12 mit seinem bestimmten Bereich 16 bzw. das wenigstens eine Einsatzelement 22 derart auf den wenigstens zwei feststehenden Gleitleisten 20, 21 auf, so dass das Kettenglied 12 entlang der wenigstens zwei feststehenden Gleitleisten 20, 21 im Zugtrum gleitend bewegt werden kann.

Die wenigstens zwei feststehenden Gleitleisten 20, 21 sind jeweils aus einem Material gebildet, welches gegenüber dem Material des wenigstens einen Einsatzelements 22 zumindest näherungsweise die gleiche Abriebfestigkeit oder eine geringere Abriebfestigkeit aufweist. Insbesondere sind die wenigstens zwei Gleitleisten 20, 21 aus einem metallischen Material, wie beispielsweise Edelstahl, gebildet.

Demnach ergibt sich zwischen den wenigstens zwei Gleitleisten 20, 21 und dem wenigstens einen Einsatzelement 22 eine Materialpaarung von Stahl auf Stahl, während hingegen die Standfläche aus einem Kunststoffmaterial gebildet ist.

Zwar hat ausschließlich zwischen den wenigstens zwei feststehenden Gleitleisten 20, 21 und dem wenigstens einen Einsatzelement 22 eine Schmierung mittels wenigstens einen Schmiermittels zu erfolgen, so dass das Kettenglied 12 ohne große Verschleißerscheinungen entlang der wenigstens zwei feststehenden Gleitleisten 20, 21 bewegt werden kann. Da die Standfläche 14 des Kettengliedes 12 aus einem Kunststoff gebildet ist, entfällt in diesem Bereich des Kettengliedes 12 die Schmierung mittels des wenigstens einen Schmiermittels. Damit werden die Artikel ohne zu Verschmutzen und/oder zu Verkleben auf der Standfläche 14 fortbewegt.

Die Fig. 2B zeigt ein weiteres Ausführungsbeispiel eines Kettengliedes 12 in einer Schnittdarstellung, welches auf wenigstens zwei feststehenden Gleitleisten 20, 21 aufliegt.

Das in Fig. 2B dargestellte Kettenglied 12 unterscheidet sich gegenüber der in Fig. 2A darstellten Ausführungsform lediglich darin, dass das Kettenglied 12 zwei bestimmte Bereiche 16 umfasst, welche bestimmten Bereiche 16 für den Oberflächenkontakt mit den wenigstens zwei feststehenden Gleitleisten 20, 21 ausgebildet sind.

Die wenigstens zwei bestimmten Bereiche 16 sind jeweils durch wenigstens ein Einsatzelement 22 gebildet, welche jeweils in Aussparungen 24, 25 des Kettengliedes 12 eingesetzt sind. Demnach umfasst das Kettenglied 12 wenigstens zwei Aussparungen 24, 25, welches jeweils korrespondierend zu den wenigstens einen Einsatzelement 22 ausgebildet ist.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Wenn auch im Zusammenhang der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen des Systems zum Fortbewegen von Artikeln und/oder der Förderkette oder anderer gezeichneter Elemente in irgendeiner Weise in seinem Verständnis beeinträchtigt wäre.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Förderkette
- 12: Kettenglieder
- 14: Standfläche
- 16: bestimmter Bereich
- 18: weitere Bereiche
- 20: Gleitleiste
- 21: Gleitleiste
- 22: Einsatzelement
- 24: Aussparung
- 25: Aussparung
- 26: Gleitfläche

## Patentansprüche

1. System zum Fortbewegen von Artikeln wie Getränkebehälter oder dergleichen, umfassend
- mindestens eine Förderkette (10), welche eine Standfläche (14) zum stehenden Transport von Artikeln liefert oder ausbildet,
wobei die Förderkette (10) aus einer Vielzahl von gelenkig miteinander verbundenen Kettengliedern (12) gebildet ist,
- sowie wenigstens zwei feststehende Gleitleisten (20, 21), mit welchen die mindestens eine Förderkette (10) während des Transportes von Artikeln in Oberflächenkontakt steht,
wobei das jeweilige Kettenglied (12) wenigstens zwei bestimmte, definierte
und/oder abgegrenzte Bereiche (16) umfasst, welche bestimmten Bereiche (16) für den Oberflächenkontakt mit wenigstens zwei feststehenden Gleitleisten (20, 21) ausgebildet sind, und
wobei vorgesehen ist, dass die mindestens eine Förderkette (10) in den definierten und/oder abgegrenzten Bereichen (16), welche Bereiche (16) für einen Oberflächenkontakt mit den wenigstens zwei Gleitleisten (20, 21) vorgesehen sind oder einen Oberflächenkontakt mit den Gleitleisten (20, 21) ausbilden, gegenüber weiteren Bereichen (18) aus einem Material mit erhöhter Abriebfestigkeit ausgebildet ist und/oder ein Material mit erhöhter Abriebfestigkeit aufweist, wobei die wenigstens zwei bestimmten Bereiche (16) jeweils durch wenigstens ein Einsatzelement (22) gebildet sind,
**dadurch gekennzeichnet, dass** die Einsatzelemente (22) jeweils in Aussparungen (24, 25) des Kettengliedes (12) eingesetzt sind, und
wobei das jeweilige Kettenglied (12) wenigstens zwei Aussparungen (24, 25) umfasst, welche jeweils korrespondierend zu den Einsatzelementen (22) ausgebildet sind, sodass die Einsatzelemente (22) jeweils bündig in die Aussparungen (24) der Kettenglieder (12) eingesetzt werden können.

2. System nach Anspruch 1, bei welchem die wenigstens zwei feststehenden Gleitleisten (20, 21) aus einem Material gebildet sind, welches gegenüber dem Material der bestimmten Bereiche (16) der mindestens einen Förderkette (10) zumindest näherungsweise die gleiche Abriebfestigkeit oder eine geringere Abriebfestigkeit aufweist.

3. System nach Anspruch 1 oder 2, bei welchem die wenigstens zwei feststehenden Gleitleisten (20, 21) aus einem metallischen Material, insbesondere aus Edelstahl, oder aus wenigstens einem Kunststoff gebildet sind.

4. System nach Anspruch einem der Ansprüche 1 bis 3, bei welchem das jeweilige Einsatzelement (22) auswechselbar in die jeweilige Aussparung (24, 25) der mindestens einen Förderkette (10) eingesetzt ist.

5. System nach einem der vorherigen Ansprüche, bei welchem das jeweilige Einsatzelement (22) aus einem metallischen Material, insbesondere aus Stahl oder einer Stahllegierung, oder aus sonstigem Material mit erhöhter Abriebfestigkeit, gebildet ist.

6. System nach einem der vorherigen Ansprüche, bei welchem der weitere Bereich (18) der mindestens einen Förderkette (10) durch wenigstens einen Kunststoff mit einer geringeren Abriebfestigkeit als das jeweilige Einsatzelement (22) gebildet ist.

7. System nach einem der vorherigen Ansprüche, bei welchem die wenigstens zwei feststehenden Gleitleisten (20, 21) als Abstützfläche für die zwei bestimmten Bereiche (16) der mindestens einen Förderkette (10) ausgebildet sind.

8. System nach einem der vorherigen Ansprüche, bei welchem die wenigstens zwei feststehenden Gleitleisten (20, 21) vorzugsweise parallel zueinander angeordnet sind, mit welchen die mindestens eine Förderkette (10) mit ihren bestimmten Bereichen (16) während des Transportes von Artikeln in Oberflächenkontakt steht.

## Claims

1. A system for moving along articles, such as beverage containers or the like, the system comprising
- at least one conveyor chain (10) which provides or forms a standing surface (14) for the standing transport of articles,
wherein the conveyor chain (10) is formed from a multitude of chain links (12) connected to each other in an articulated manner,
- as well as at least two stationary sliding rails (20, 21), with which the at least one conveyor chain (10) is in surface contact during the transport of articles,
wherein the particular chain link (12) comprises at least two specific, defined and/or delineated areas (16), which specific areas (16) are designed for the surface contact with at least two stationary sliding rails (20, 21), and
wherein it is provided that the at least one conveyor chain (10) in the defined and/or delineated areas (16), which areas (16) are provided for a surface contact with the at least two sliding rails (20, 21) or form a surface contact with the sliding rails (20, 21), is formed from and/or has a material with an abrasion resistance that is increased compared to other areas (18),
wherein the at least two specific areas (16) are each formed by at least one insert element (22),
**characterised in that** the insert elements (22) are each inserted into recesses (24, 25) in the chain link (12), and
wherein the particular chain link (12) comprises at least two recesses (24, 25), which are each formed to correspond to the insert elements (22), so that the insert elements (22) can each be inserted flush into the recesses (24) of the chain links (12).

2. The system according to claim 1, in which the at least two stationary sliding rails (20, 21) are formed from a material, which has at least approximately the same abrasion resistance or a lower abrasion resistance compared to the material of the specific areas (16) of the at least one conveyor chain (10).

3. The system according to claim 1 or 2, in which the at least two stationary sliding rails (20, 21) are formed from a metallic material, in particular from stainless steel, or from at least one plastic.

4. The system according to one of the claims 1 to 3, in which the particular insert element (22) is inserted so as to be replaceable into the particular recess (24, 25) of the at least one conveyor chain (10).

5. The system according to one of the previous claims, in which the particular insert element (22) is formed from a metallic material, in particular from steel or a steel alloy, or from other material with increased abrasion resistance.

6. The system according to one of the previous claims, in which the other area (18) of the at least one conveyor chain (10) is formed by at least one plastic with a lower abrasion resistance than the particular insert element (22).

7. The system according to one of the previous claims, in which the at least two stationary sliding rails (20, 21) are designed as a support surface for the two specific areas (16) of the at least one conveyor chain (10).

8. The system according to one of the previous claims, in which the at least two stationary sliding rails (20, 21) are preferably arranged parallel to one another, and with which sliding rails (20, 21) the at least one conveyor chain (10) is in surface contact with its specific areas (16) during the transport of articles.

## Revendications

1. Système destiné à déplacer des articles tels que des récipients à boissons ou similaires, comprenant
- au moins une chaîne de transport (10) qui fournit ou forme une surface de pose (14) pour transporter de manière debout des articles,
dans lequel la chaîne de transport (10) est formée d'une pluralité de maillons de chaîne (12) reliés les uns aux autres de manière articulée,
- ainsi qu'au moins deux baguettes de glissement fixes (20, 21) avec lesquelles ladite au moins une chaîne de transport (10) est en contact de surface lors du transport d'articles,
dans lequel le maillon de chaîne (12) respectif comprend au moins deux zones (16) déterminées définies et/ou délimitées, lesquelles zones (16) déterminées sont conçues pour le contact de surface avec au moins deux baguettes de glissement fixes (20, 21), et
dans lequel il est prévu que, dans les zones (16) définies et/ou délimitées, lesquelles zones (16) sont prévues pour un contact de surface avec lesdites au moins deux baguettes de glissement (20, 21) ou forment un contact de surface avec les baguettes de glissement (20, 21), ladite au moins une chaîne de transport (10) est réalisée, par rapport à d'autres zones (18), à partir d'un matériau ayant une résistance à l'abrasion accrue et/ou présente un matériau ayant une résistance à l'abrasion accrue,
dans lequel lesdites au moins deux zones (16) déterminées sont chacune formées par au moins un élément d'insertion (22),
**caractérisé par le fait que** les éléments d'insertion (22) sont chacun insérés dans des évidements (24, 25) du maillon de chaîne (12), et
dans lequel le maillon de chaîne (12) respectif comprend au moins deux évidements (24, 25) qui sont respectivement conçus de manière à correspondre aux éléments d'insertion (22) de sorte que les éléments d'insertion (22) peuvent être insérés chacun à fleur dans les évidements (24) des maillons de chaîne (12).

2. Système selon la revendication 1, dans lequel lesdites au moins deux baguettes de glissement fixes (20, 21) sont réalisées à partir d'un matériau qui présente une résistance à l'abrasion au moins approximativement identique à celle du matériau des zones (16) déterminées de ladite au moins une chaîne de transport (10) ou une résistance à l'abrasion inférieure à celle-ci.

3. Système selon la revendication 1 ou 2, dans lequel lesdites au moins deux baguettes de glissement fixes (20, 21) sont réalisées à partir d'un matériau métallique, en particulier d'acier inoxydable, ou d'au moins une matière plastique.

4. Système selon l'une quelconque des revendications 1 à 3, dans lequel l'élément d'insertion (22) respectif est inséré de manière remplaçable dans l'évidement (24, 25) respectif de ladite au moins une chaîne de transport (10).

5. Système selon l'une quelconque des revendications précédentes, dans lequel l'élément d'insertion (22) respectif est réalisé à partir d'un matériau métallique, en particulier d'acier ou d'un alliage d'acier, ou d'un autre matériau présentant une résistance à l'abrasion accrue.

6. Système selon l'une quelconque des revendications précédentes, dans lequel ladite autre zone (18) de ladite au moins une chaîne de transport (10) est formée par au moins une matière plastique ayant une résistance à l'abrasion inférieure à celle de l'élément d'insertion (22) respectif.

7. Système selon l'une quelconque des revendications précédentes, dans lequel lesdites au moins deux baguettes de glissement fixes (20, 21) sont conçues en tant que surface d'appui pour les deux zones (16) déterminées de ladite au moins une chaîne de transport (10).

8. Système selon l'une quelconque des revendications précédentes, dans lequel lesdites au moins deux baguettes de glissement fixes (20, 21) sont disposées de préférence parallèlement l'une à l'autre, avec lesquelles ladite au moins une chaîne de transport (10) est en contact de surface par ses zones déterminées (16) lors du transport d'articles.
